# EUROPÄISCHE PATENTSCHRIFT

(11) **EP 0 832 800 B1**
(45) Veröffentlichungstag und Bekanntmachung des Hinweises auf die Patenterteilung: **03.05.2006**
(21) Anmeldenummer: 97112677.6
(22) Anmeldetag: 24.07.1997
(51) Int. Cl.: B60T 8/00, B60R 16/02

(54) **Elektronisches Bremssystem für Radfahrzeuge**
Electronic braking system for wheeled vehicles
Système de freinage électronique pour véhicules à roues

(30) Priorität: 28.09.1996 DE 19640148
(43) Veröffentlichungstag der Anmeldung: 01.04.1998
(73) Patentinhaber: WABCO GmbH & CO. OHG, 30453 Hannover (DE)
(72) Erfinder: Kähler, Kurt, 31535 Neustadt (DE); Stehr, Wolfgang, 30171 Hannover (DE)
(74) Vertreter: Schrödter, Manfred

(56) Entgegenhaltungen:
- EP-A- 0 580 016
- US-A- 5 255 962
- US-A- 5 429 425

## Beschreibung

Die Erfindung betrifft ein elektronisches Bremssystem für Straßenfahrzeuge gemäß dem Oberbegriff des Patentanspruchs 1.

Ein derartiges elektronisches Bremssystem ist aus der Schrift DE - OS - 40 22 671 bekannt, auf die vollinhaltlich Bezug genommen wird. Das Bremssystem besteht aus zwei an zentraler Stelle im Fahrzeug angeordneten Zentralmodulen, die im wesentlichen aus mindestens einem Mikrocomputer bestehen, und aus vier in der Nähe der Räder angeordneten Radmodulen.

Den Zentralmodulen wird als wichtigste Eingangsgröße die vom Fahrer vorgegebene Bremspedal-Stellung zugeleitet. Beide Zentralmodule sind über einen Datenbus miteinander verbunden.

Die Radmodule sind mit eigener Intelligenz ausgestattet und enthalten einen Mikrocomputer. Je zwei Radmodule sind über einen Datenbus miteinander verbunden, welcher zugleich auch an eines der beiden Zentralmodule angeschlossen ist. Die Radmodule sind dem Zentralmodul, mit dem sie über den Datenbus verbunden sind, hierarchisch unterstellt; es findet eine hierarchische Vorgabe vom Bremswertgeber über die Zentralmodule zu den Radmodulen statt: So wird ein in einem Zentralmodul empfangenes Bremspedal-Signal, gegebenenfalls in modifizierter Form, an die angeschlossenen Radmodule weitergeleitet.

Bezüglich der Module stellen also die Zentralmodule eine obere und die Radmodule eine untere Hierarchie-Ebene dar.

Die Radmodule sind für die eigentliche Bremsung zuständig, die sie ausführen, indem sie entsprechende Bremsdruck-Modulatoren ansteuern. Neben dieser Funktion führt ein Radmodul auch die Blockierschutz- und gegebenenfalls auch eine Schleuderschutz-Regelung für das ihm zugeordnete Rad durch; den Radmodulen sind entsprechende Radsensoren zugeordnet, und sie verfügen über die Intelligenz sowohl zur Blockier-Erkennung der Räder als auch zur Einregelung auf z. B. einen konstanten Schlupfwert.

Die für die ABS-Regelung benötigte Fahrzeugreferenzgeschwindigkeit wird in den Zentralmodulen erzeugt. Hierzu werden die Primärdaten, nämlich die Radgeschwindigkeiten aus zwei Radmodulen, zu ihrem Zentralmodul geschickt; d. h. sie werden der oberen von der unteren Hierarchie-Ebene zur Verfügung gestellt. Auf der oberen Hierarchie-Ebene können beide Zentralmodule über ihren Datenbus miteinander verkehren und erfahren auf diese Weise alle Rad-Geschwindigkeiten der Räder. Aus diesen Informationen wird in den Zentralmodulen die Fahrzeugreferenzgeschwindigkeit gebildet. Im Anschluß daran sendet jedes Zentralmodul die Fahrzeugreferenzgeschwindigkeit per Datenbus in die untere Hierarchie-Ebene zu den ihm zugeordneten Radmodulen. Die Radmodule verwenden die Fahrzeugreferenzgeschwindigkeit bei der ABS-Regelung.

Durch die Struktur des Bus-Systems, nämlich die beschriebene Primärdaten-Erzeugung in der unteren Hierarchie-Ebene, den Transfer der Primärdaten in die obere Hierarchie-Ebene, den wechselseitigen Datentaustausch und die Durchführung der Berechnungen in dieser Hierarchie-Ebene und schließlich den Rücktransport des Ergebnisses in die untere Hierarchie-Ebene entstehen Totzeiten, die die Funktion der ABS- oder der ASR-Regelung nachteilig beeinflussen können.

Der Erfindung liegt deshalb die Aufgabe zugrunde, Maßnahmen für ein elektronisches Bremssystem für Straßenfahrzeuge vorzusehen, damit Totzeiten, die ihren Ursprung in der Struktur der Bus-Systeme haben, vermieden werden.

Diese Aufgabe wird durch die in Patentanspruch 1 angegebene Erfindung gelöst. Weiterbildungen und vorteilhafte Ausführungsbeispiele sind in den Unteransprüchen angegeben.

Die Erfindung hat den Vorteil, daß die Anforderungen an die Zentralmodule reduziert werden und dadurch der Aufwand bezüglich der Schaltungstechnik oder bezüglich des Speicherbedarfes verringert werden kann.

Die Erfindung wird im folgenden anhand eines Ausführungsbeispiels, das in den Zeichnungen dargestellt ist, näher erläutert.

Dabei zeigen:
- Fig. 1: das Blockschaltbild des elektronischen Bremssystems, bei dem zur Verbindung von Radmodul-Datenbussen eine Anordung aus zwei elektrisch betätigbaren Schaltern vorgesehen ist;
- Fig. 2: das Blockschaltbild des elektronischen Bremssystems, bei dem zur Verbindung von Radmodul-Datenbussen eine Anordung aus zwei unten erläuterten elektronischen Sternkopplern vorgesehen ist.

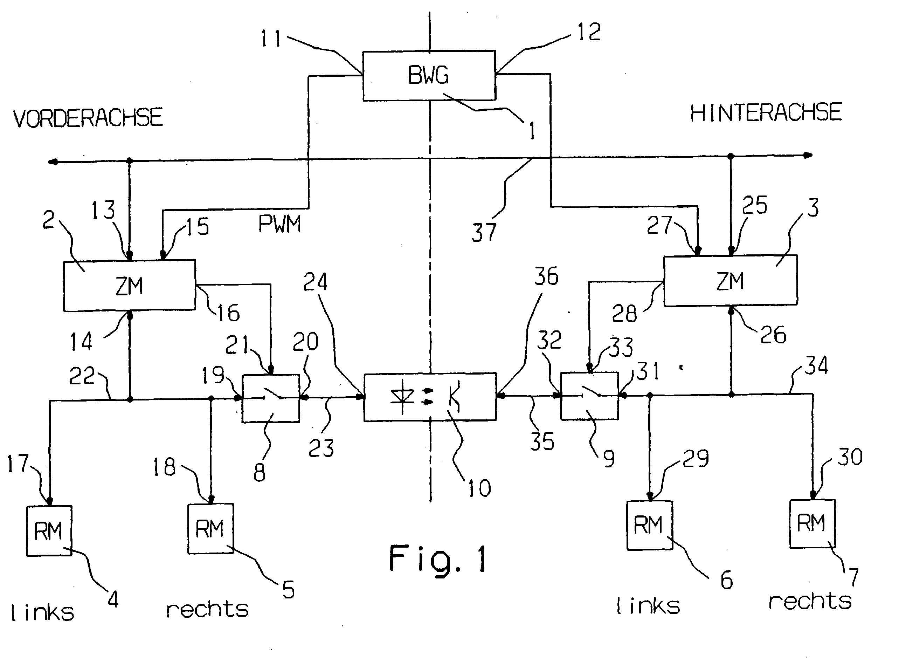

Fig. 1 zeigt das Blockschaltbild des elektronischen Bremssystems für zwei Achsen, eine Vorder- und eine Hinterachse. Bezüglich dieser Achsen ist das Bremssystem völlig symmetrisch aufgebaut, was durch den gestrichelten Trennstrich in der Mitte von Fig. 1 angedeutet wird.

Zur Vorgabe des Bremswertes ist ein zweikreisig aufgebauter Bremswertgeber (1) vorgesehen, der über einen ersten Ausgang (11) und einen zweiten Ausgang (12) verfügt. Der Bremswertgeber (1) gibt einen Gesamtbremswert für die gesamte Bremsung durch die Vorderachse und für die Bremswert-Vorgabe der Hinterachse vor.

Für die Vorderachse ist ein Zentralmodul (2) mit einem ersten Datenbus-Anschluß (13), einem zweiten Datenbus-Anschluß (14), einem Eingang (15) und einem Ausgang (16) vorgesehen.

Für die Räder der Vorderachse sind Radmodule vorgesehen; für das linke Rad an der Vorderachse ist dies ein Radmodul (4) mit einem Datenbus-Anschluß (17), für das rechte Rad an der Vorderachse ist dies ein Radmodul (5) mit einem Datenbus-Anschluß (18).

Für die Vorderachse ist weiter eine steuerbare Schalteinrichtung (8) als eine Einrichtung mit einem elektrisch gesteuerten mechanischen Schalter vorgesehen. Diese Schalteinrichtung kann z. B. in Form eines über ein elektrisches Signal steuerbares Relais mit einer Anzahl von getrennten mechanischen Schaltkontakten ausgeführt sein, wobei die Anzahl der Schaltkontakte gleich der Anzahl der Signalleitungen des Datenbusses ist. Die Schalteinrichtung (8) verfügt über einen ersten Anschluß (19), einen zweiten Anschluß (20) und einen Steuer-Eingang (21).

Zum Datenaustausch zwischen den verschiedenen, der Vorderachse zugeordneten Modulen ist ein Radmodul-Datenbus (22) und eine Datenbus-Erweiterung (23) vorgesehen. Es ist weiter eine unten erläuterte Trenneinrichtung (10) mit einem ersten Anschluß (24) und einem zweiten Anschluß (36) vorgesehen.

Der erste Ausgang (11) des Bremswertgebers (1) ist mit dem Eingang (15) des Zentralmoduls (2) verbunden. Über diese Verbindung wird die Bremsanforderung des Bremswertgebers dem Zentralmodul für die Vorderachse vorgegeben. Die Vorgabe kann sowohl in Form eines Analogwie auch eines Digital-Signales erfolgen; besonders vorteilhaft ist die Vorgabe in Form eines Pulsweitenmodulierten Digital-Signals, das eine hohe Sicherheit gegen elektromagnetische Störungen, die durch die verschiedenartigsten elektronischen und elektromagnetischen Einheiten im Fahrzeug verursacht werden, bietet. Der Ausgang (16) des Zentralmoduls (2) ist mit dem Steuer-Eingang (21) der Schalteinrichtung (8) verbunden. Über diese digitale Verbindung wird die Schalteinrichtung (8) eingeschaltet oder abgeschaltet, wobei im Falle der Einschaltung die mechanischen Schaltkontakte geschlossen und im Falle der Abschaltung geöffnet sind.

Der Radmodul-Datenbus (22) ist an die verschiedenen Datenbus-Anschlüsse der beteiligten Module und Einrichtungen angeschlossen; es sind dies der zweite Datenbus-Anschluß (14) des Zentralmoduls (2), der Datenbus-Anschluß (17) des Radmoduls (4), der Datenbus-Anschluß (18) des Radmoduls (5) und der erste Anschluß (19) der Schalteinrichtung (8).

Die Datenbus-Erweiterung (23) ist an den zweiten Anschluß (20) der Schalteinrichtung (8) und an den ersten Anschluß (24) der Trenneinrichtung (24) angeschlossen.

Durch den erwähnten völlig gleichartigen Aufbau von Komponenten an der Vorderachse mit Komponenten an der Hinterachse sind für die Hinterachse gleichartige Module und Einrichtungen vorgesehen. Im einzelnen sind dies ein Zentralmodul (3) für die Hinterachse mit einem ersten Datenbus-Anschluß (25), einem zweiten Datenbus-Anschluß (26), einem Eingang (27) und einem Ausgang (28), ein Radmodul (6) für das linke Rad der Hinterachse mit einem Datenbus-Anschluß (29), ein Radmodul (7) für das rechte Rad der Hinterachse mit einem Datenbus-Anschluß (30), eine Schalteinrichtung (9) für die Hinterachse mit einem ersten Anschluß (31), einem zweiten Anschluß (32) und einem Steuereingang (33), ein Radmodul-Datenbus für die Module und Einrichtungen der Hinterachse und eine Datenbus-Erweiterung (35) für die Hinterachse.

Die völlig gleichartige Verschaltung von Modulen und Einrichtungen der Hinterachse zu denjenigen der Vorderachse ergibt sich, wenn man die vorstehend beschriebenen Verbindungen für die Module und Einrichtungen der Vorderachse auf die Hinterachse überträgt, indem man in die beschriebenen Verbindungen statt der für die Vorderachse geltenden Bezugszeichen diejenigen der Hinterachse einsetzt. Für die Verbindungen des Bremswertgebers (1) ist statt des Bezugszeichens (11) der Vorderachse das Bezugszeichen (12) der Hinterachse einzusetzen, für die Trenneinrichtung (10) ist statt des Vorderachsen-Bezugszeichens (24) das Hinterachsen-Bezugszeichen (36) einzusetzen, für das Zentralmodul (3) sind statt der Vorderachsen-Bezugszeichen (13, 14, 15, 16) die Hinterachsen-Bezugszeichen (25, 26, 27, 28) einzusetzen. Für den Hinterachsen-Radmodulbus (34) sind statt der Vorderachsen-Bezugszeichen (14, 17, 18, 19) die Hinterachsen-Bezugszeichen (26, 29, 30, 31) einzusetzen, und für die Datenbus-Erweiterung der Hinterachse sind statt der Vorderachsen-Bezugszeichen (20, 24) die Hinterachsen-Bezugszeichen (32, 36) einzusetzen.

Die Trenneinrichtung (10) dient zur galvanischen Trennung zwischen der der Vorderachse zugeordneten Datenbus-Erweiterung (23) und der Datenbus-Erweiterung (35) für die Hinterachse. Die Anzahl der von der Trenneinrichtung getrennten Leitungen ist gleich der Anzahl der Signalleitungen des Datenbusses. Die Trenneinrichtung ist z. B. unter Verwendung von Optokopplern realisiert, es sind jedoch auch andere Realisierungen möglich. Die galvanische Trennung zwischen erstens den Signalpegeln der Datenbus-Erweiterung (23) am ersten Anschluß (24) und zweitens den Signalpegeln der Datenbus-Erweiterung (35) am zweiten Anschluß (36) hat auf den Datenverkehr zwischen beiden Datenbus-Erweiterungen keinen Einfluß, da die Wechselspannungs-Anteile ungedämpft übertragen werden. Neben der Trennung der Bezugspotentiale [Massenpotentiale] zwischen den Anschlüssen (24) und (36) begrenzt die Trenneinrichtung (10) auch die übertragenen Spannungspegel auf einen sicheren Wert; sie verhindert so eine Zerstörung einer Datenbus-Erweiterung durch die andere Datenbus-Erweiterung im Falle eines zerstörenden Elektronikfehlers.

Wie unten erläutert, werden Radmodul-Datenbusse, die auf eine unten erläuterte Weise gekoppelt sind, beim Auftreten eines Bus-Fehlers über die Schalteinrichtungen getrennt, so daß eine funktionelle Beeinträchtigung eines Datenbusses durch den anderen Datenbus ausgeschlossen ist. Solange nicht zerstörende Bus-Fehler vorliegen, die zwar die Funktion außer Kraft setzen, jedoch die Elektronik selbst nicht zerstören, sind die Schalteinrichtungen zur Trennung als solche ausreichend, und es kann auf die Trenneinrichtung (10) verzichtet werden. Nicht zerstörende Funktionsfehler bestehen z. B. in den unten erläuterten Kurzschlüssen zwischen Leitungen untereinander und Kurzschlüssen von Leitungen zu der Versorgungsspannung oder zum Massepotential. Bei einem Verzicht auf die Trenneinrichtung (10) sind die Datenbus-Erweiterungen (23) und (35) direkt miteinander verbunden.

Die Trenneinrichtung (10) ist gegen die Gefahr eines zerstörenden Bus-Fehlers vorgesehen, wenn durch einen Elektronikfehler auf einem Radmodul-Datenbus sehr hohe Störspannungen auftreten, die die Elektronik des anderen Radmodul-Datenbusses zerstören würden [z. B. Zerstörung der Bus-Empfänger und Bus-Treiber]. Solche Störspannungen können auftreten, wenn durch schlechten Kontakt oder "Stecken unter Spannung" einer Komponente bei ungünstiger Reihenfolge Ströme über den Datenbus gezogen werden oder ein Potentialausgleich über den Datenbus stattfindet.

Bei einer Realisierung der Trenneinrichtung (10) ist darauf zu achten, daß keine unerwünschten rückkopplungsbedingten Übertragungsstörungen entstehen; werden Optokoppler eingesetzt so kann für die Trenneinrichtung (10) z. B. eine Schaltungsanordnung nach der nicht vorveröffentlichten deutschen Patentanmeldung 196 03 221.0 gewählt werden. Den Maßnahmen zur Rückkopplungsverhinderung in dieser Patentanmeldung liegen im übrigen sehr ähnliche Grundüberlegungen wie den vergleichbaren Maßnahmen in der unten erläuterten Schalteinrichtung nach dem Sternkoppler-Prinzip zugrunde.

Zum Datenaustausch zwischen dem Zentralmodul (2) der Vorderachse und dem Zentralmodul (3) der Hinterachse ist ein Fahrzeugbus (37) vorgesehen. Der Fahrzeugbus (37) ist damit sowohl an den ersten Datenbus-Anschluß (13) des Zentralmoduls (2) als auch an den ersten Datenbus-Anschluß (25) des Zentralmoduls (3) angeschlossen.

Grundsätzlich können Datenbusse in unterschiedlicher Technologie ausgeführt werden, wobei einerseits parallele Datenbus-Systeme mit einer Übertragung auf mehreren Datenleitungen und andererseits serielle Datenbus-Systeme mit einer Übertragung auf nur einer Datenleitung zur Auswahl stehen. Wie auch schon beim St.d.T. erwähnt, ist es bei Radfahrzeugen vorteilhaft, serielle Bussysteme einzusetzen, da diese im Vergleich zu parallelen Bussystemen weniger Raum für die Verkabelung benötigen, was besonders deshalb wichtig ist, weil in Radfahrzeugen das Raumangebot für Verkabelungen meist begrenzt ist.

Unter den seriellen Bussystemen ist es besonders vorteilhaft, ein Bussystem zu wählen, das nach der "Carrier sense multiple access with collision detection access method" (CSMA/CD-Verfahren) arbeitet. Das CSMA/CD-Verfahren ist in dem internationalen Standard ISO 8802-3 normiert. Bei derartigen Bussystemen sind alle Bus-Teilnehmer gleichberechtigt, und es gibt keinen übergeordneten "Bus-Master" für eine Zuteilung von Prioritäten an die Bus-Teilnehmer. Jeder Bus-Teilnehmer überwacht selbständig den Zustand auf dem Datenbus und kann bei freiem Bus mit dem Senden einer Nachricht beginnen. Wenn mehr als ein Bus-Teilnehmer gleichzeitig eine Nachricht zu senden versuchen, entsteht auf dem Datenbus eine Kollision, die erkannt wird. Wenn eine Kollision erkannt wird, so ist diese Nachricht gestört und muß in geeigneter Weise wiederholt werden.

Unter den Bussystemen nach dem CSMA/CD-Verfahren ist entsprechend dem Normentwurf ISO/11898 der Datenbus-Standard "Road vehicles - Interchange of digital information - Controller area network (CAN) for high-speed communication" [im folgenden als CAN-Bus-Standard bezeichnet] speziell für die Verwendung in Radfahrzeugen vorgeschlagen worden; dieser Standard trägt daher den in einem Radfahrzeug vorliegenden Gegebenheiten besonders Rechnung. Bei diesem Bussystem ist die Kollisionserkennung "non-destructive" ausgeführt, was bedeutet, daß keine Nachricht verlorengeht, und nie eine Wiederholung von Nachrichten erforderlich ist. Die Arbitrierung wird bitweise durchgeführt; durch die Zuweisung eines Zustandes "dominant" oder "rezessiv" wird erreicht, daß bei einer Kollision ein Teilnehmer mit höherer Priorität seine Botschaft weiterreichen kann, während ein Bus-Teilnehmer mit niederer Priorität sich automatisch zurückzieht. Aufgrund dieser Vorteile wird der CAN-Bus-Standard für alle Datenbusse (einschließlich der Datenbus-Erweiterungen) des Ausführungsbeispiels zugrundegelegt. Beim CAN-Bus-Standard besteht der Bus physikalisch aus einer vorzugsweise verdrillten Zweidrahtleitung, so daß insgesamt zwei Signalleitungen vorhanden sind.

Bei dem elektronischen Bremssystem nach Fig. 1 stellt der Fahrzeugbus (37) die obere Hierarchieebene dar. Über den Fahrzeugbus (37) werden alle übergeordneten Informationen ausgetauscht; hierzu gehört z. B. der Gesamtbremswert, der zwar vom Bremswertgeber (1) sowohl über seinen ersten Ausgang (11) zum Vorderachsen-Zentralmodul (2) als auch über seinen zweiten Ausgang (12) an das Hinterachs-Zentralmodul (3) übertragen wird. - Falls jedoch z. B. der zweite Ausgang (12) des Bremswertgebers (1) defekt sein sollte, so wird dem Zentralmodul (3) der Brems-Sollwert vom Zentralmodul (2) über den Fahrzeugbus (37) übermittelt. Ebenso können über den Fahrzeugbus Informationen von übergeordneter Bedeutung zwischen den Zentralmodulen und anderen an den Fahrzeugbus angeschlossenen Elektronik-Einheiten ausgetauscht werden.

So kann z. B. neben den zum Bremsen vorgesehenen Zentralmodulen (2, 3) auch ein Elektronikmodul zur Steuerung der Kraftstoffüllung an dem Fahrzeugbus (37) angeschlossen sein. Üblicherweise ist nämlich neben der unten erläuterten Antiblockier-Regelung auch eine Antriebsschlupf-Regelung realisiert. Nach diesem an sich bekannten Verfahren wird nach erfolgter Synchronisierung der Antriebsräder durch Betätigen der Radbremsen zusätzlich das Antriebsmoment des Motors reduziert. Diese Moment-Reduzierung wird vom Zentralmodul (3) [angenommen die Hinterachse sei die Antriebsachse] veranlaßt, indem über den Fahrzeugbus die Kraftstoffüllung reduziert wird.

Aus dem vom Bremswertgeber (1) erhaltenen Gesamtbremswert erzeugt das Zentralmodul (2) die Brems-Sollwerte für das Radmodul (4) des linken Vorderachsen-Rades und für das Radmodul (5) des rechten Vorderachsen-Rades, und das Zentralmodul (3) erzeugt die Brems-Sollwerte für das Radmodul (6) des linken Hinterrades und für das Radmodul (7) des rechten Hinterrades. Diese von den Zentralmodulen erzeugten Brems-Sollwerte für die einzelnen Radmodule sind im allgemeinen ungleich dem vom Bremswertgeber (1) vorgegebenen Gesamtbremswert [Sollwert für die gesamte Bremsung], da die Zentralmodule (2, 3) die aufgrund des Gesamtbremswertes geforderte gesamte Bremskraft in bestimmter Weise auf die vier Räder des Fahrzeugs aufteilen. So ist es z. B. vorteilhaft, bei geringer Bremskraft-Anforderung die Verteilung der Bremskraft über die Bremsen aller Räder derart vorzunehmen, daß sich ein gleichmäßiger Belagverschleiß ergibt.

Die einzelnen Radmodule erhalten ihren Brems-Sollwert von dem ihnen zugewiesenen Zentralmodul über die Radmodul-Datenbusse; für die Radmodule (4, 5) ist dies der Radmodul-Datenbus (22), und für die Radmodule (6, 7) ist dies der Radmodul-Datenbus (34). Die Radmodul-Datenbusse (22, 34) stellen die untere Hierarchie-Ebene dar; auf ihnen wird der wechselseitige Datenaustausch zwischen Zentralmodulen und Radmodulen und der Datenaustausch zwischen den Radmodulen untereinander abgewickelt.

Ein Radmodul ist dafür vorgesehen, die Bremse des ihm zugeordneten Rades selbständig zu betätigen. Für diese Hauptfunktion verfügt ein Radmodul über einen elektronischen Regler, der ein an das Radmodul angeschlossenes Stellglied zur Bremsbetätigung derart steuert, daß ein von einem ebenfalls an das Radmodul angeschlossenen Sensor gelieferter Istwert gleich dem vorgegebenen Sollwert für die Bremsbetätigung ist. In einer Basisausrüstung besteht das Stellglied aus einem Bremsdruckmodulator, der aus elektrisch steuerbaren Ventileinheiten zur Erhöhung bzw. Verringerung des Druckes in einem Bremszylinder dient, welcher dann die eigentliche Bremsung des dem Radmodul zugeordneten Rades durchführt. In der Basisausführung ist der Sensor als Drucksensor zur Messung des im Bremszylinder herrschenden Druckes vorgesehen, so daß das Radmodul im Zusammenwirken mit dem Stellglied und dem Sensor als Druckregelkreis arbeitet, dem ein Bremsdruck-Sollwert vorgegeben wird.

Neben dem Drucksensor ist als weiterer Sensor ein Radsensor vorgesehen, der die Radgeschwindigkeit des dem Radmodul zugeordneten Rades mißt und dem Modul zuführt. Unter Verwendung des Radsensor-Meßwertes führt das Radmodul die Antiblockier-Regelung für das ihm zugeordnete Rad durch, indem in an sich bekannter Weise ein beginnendes Blockieren der Räder erkannt und der Bremsdruck entsprechend der Antiblockier-Regelung, z. B. auf einen konstanten Schlupfwert von etwa 20 Prozent, eingeregelt wird.

Über die Basisausführung hinaus kann für ein Radmodul auch ein Bremskraft-Sensor vorgesehen sein, der die Bremskraft mißt, die auf das dem Radmodul zugeordnete Rad einwirkt und diese dem Radmodul zuführt. Unter Verwendung der Bremskraft als Istwert kann in vorteilhafter Weise im Radmodul ein Bremskraft-Regelkreis aufgebaut werden, dem als Sollwert eine Bremskraft vorgegeben wird. Bei einer derartigen Realisierung eines Bremskraft-Regelkreises stellt die Schleife des Bremskraftreglers die äußere Regelschleife dar, der die oben erwähnte Schleife des Bremsdruckreglers als geregelte innere Schleife unterlagert ist. Zusätzlich kann für ein Radmodul auch ein Belagverschleiß-Sensor vorgesehen sein, der die Belagdicke des Bremsbelages an der Bremse des dem Radmodul zugeordneten Rades mißt. Ist ein solcher Sensor vorgesehen, so ist es vorteilhaft, daß das Radmodul den Meßwert des Belagverschleiß-Sensors am Radmodul-Bus als Parameter zur Verfügung stellt. Auf diese Weise sind die Zentralmodule in der Lage, den aktuellen Belagverschleiß-Zustand an den Bremsen der einzelnen Räder zu ermitteln und die vorstehend erwähnte Belagverschleiß-orientierte Aufteilung einer Gesamt-Bremskraft in Bremskräfte für einzelne Räder vorzunehmen.

Mit der beschriebenen Anordnung bildet jedes Radmodul einen autarken elektronischen Regler für das ihm zugeordnete Rad, der in der Lage ist, seine Regelfunktion zunächst unabhängig von allen anderen Radmodulen durchzuführen. Durch diese logische Aufteilung können einem Radmodul leicht zusätzliche Sensoren hinzugefügt werden, die das Regelverhalten verbessern; als Beispiel hierfür sei die Verwendung eines zusätzlichen Bremstemperatur-Sensors genannt.

Die Schalteinrichtungen (8) und (9) nach Fig. 1 dienen zur Kopplung bzw. Trennung der Radmodul-Datenbusse (22) und (34). Eine Kopplung ist bei eingeschalteter Schalteinrichtung gegeben, wenn ein logisches 1-Signal am Steuer-Eingang [Steuer-Eingang (21) für Schalteinrichtung (8) bzw. Steuer-Eingang (33) für Schalteinrichtung (9)] anliegt; eine Trennung ist bei abgeschalteter Schalteinrichtung gegeben, wenn am entsprechenden Steuer-Eingang ein logisches 0-Signal vorgegeben wird. Für die Trennung der Bussysteme genügt es, daß eine der beiden Schalteinrichtungen (8, 9) abgeschaltet ist, während es für die Kopplung der beiden Radmodul-Datenbusse (22, 34) erforderlich ist, daß sich beide Schalteinrichtungen im Zustand der Einschaltung befinden.

Bei einer Trennung der Radmodulbusse (22) und (34) arbeiten beide Radmodul-Datenbusse wie beim St.d.T. völlig getrennt, d. h. Zentralmodul (2), Radmodul (4) und Radmodul (5) können miteinander über den Radmodul-Datenbus (22) verkehren, und Zentralmodul (3), Radmodul (6) und Radmodul (7) können über den Radmodul-Datenbus (34) Daten austauschen: Es herrscht eine strenge Zweikreisigkeit bezüglich der Zentralmodule und der Radmodule vor, die den Zentralmodulen zugeordnet sind.

Im Falle der Kopplung der Radmodul-Datenbusse ist der Radmodul-Datenbus (22) über die eingeschaltete Schalteinrichtung (8) mit der Datenbus-Erweiterung (23) verbunden, die Datenbus-Erweiterung (23) ist über die galvanische Trenneinrichtung (10) mit der Datenbus-Erweiterung (35) verbunden, und schließlich ist die Datenbus-Erweiterung (35) über die eingeschaltete Schalteinrichtung (9) mit dem Radmodul-Datenbus (34) verbunden. Auf diesem durch Kopplung der Radmodul-Datenbusse (22, 34) entstandenen Datenbus können alle angeschlossenen Module, nämlich die beiden Zentralmodule (2, 3) und die vier Radmodule (4, 5, 6, 7) untereinander Daten austauschen.

Bei der Kopplung der Radmodul-Datenbusse ist der direkte Datenaustausch zwischen den vier Radmodulen (4, 5, 6, 7) für die Antiblockier-Regelung von besonderem Vorteil. Wie oben erläutert, führt jedes Radmodul die Antiblockier-Regelung für die Bremseinrichtung an dem ihm zugeordneten Rad selbständig durch. Für diese Regelung wird jedoch, was an sich bekannt ist, eine Fahrzeugreferenz-Geschwindigkeit benötigt, die in bekannter Weise aus den Radgeschwindigkeiten aller Räder ermittelt wird, die den Radmodulen (3, 4, 5, 6) zugeordnet sind. Da die Antiblockier-Regelung eine sehr zeitkritische Regelung darstellt, sind nach Möglichkeit alle Totzeiten zu vermeiden. Es ist daher sinnvoll, daß in jedem der Radmodule (4, 5, 6, 7) die Fahrzeugreferenz-Geschwindigkeit selbst ermittelt wird und dort daher immer aktuell zur Verfügung steht. Zur Bildung der Fahrzeugreferenz-Geschwindigkeit benutzt ein Radmodul neben der von ihm selbst für sein eigenes Rad ermittelten Radgeschwindigkeit die Radgeschwindigkeiten der anderen Räder, die in den jeweils drei anderen Radmodulen gebildet werden. Mit dem beschriebenen Verfahren tragen gekoppelte Radmodul-Datenbusse erheblich zur Verbesserung der Antiblockier-Regelung bei.

Wie erwähnt, ist im Falle der gekoppelten Radmodul-Datenbusse die strikte Zweikreisigkeit des elektronischen Bremssystems aufgehoben. Aufgrund der für das Bremssystem vorliegenden Sicherheits-Philosophie, die zu jedem Zeitpunkt eine Fehlersicherheit gegenüber einem unabhängigen Fehler gewährleistet, muß die Zweikreisigkeit sofort wieder hergestellt werden, wenn an den gekoppelten Datenbussen irgend ein Fehler auftritt. In jedem der beiden Zentralmodule (2, 3) ist daher eine Einrichtung vorgesehen, die einen Fehler auf dem an das Zentralmodul angeschlossenen Radmodul-Datenbus ermittelt.

Ein Fehler an den gekoppelten Radmodul-Datenbussen tritt auf, wenn die Signalleitungen gestört sind.

Wie erwähnt, besteht der CAN-Datenbus aus einer verdrillten Zweidrahtleitung, die mit ihrem Wellenwiderstand abgeschlossen ist. Die erste der beiden Signalleitungen wird mit CAN_{High}, die zweite wird mit CAN_{Low} bezeichnet. Zur Datenübertragung werden die Leitungen über einen Bus-Treiber mit asymmetrischen Pegeln beaufschlagt. Ist der Pegelunterschied zwischen CAN_{Hihg} und CAN_{Low} betragsmäßig genügend groß und positiv, so liegt der Zustand "dominant" vor, ist der Pegelunterschied betragsmäßig genügend klein, so ist der Zustand "rezessiv" gegeben. Ein CAN-Datenbus ist gestört, wenn eine der beiden Signalleitungen gestört ist, wobei fünf verschiedenartige Störungen vorkommen können; diese sollen am Beispiel der Datenleitung CAN_{High} erläutert werden, für die folgenden möglichen Störungen gelten:
1. Leitungsunterbrechung
2. Kurzschluß zum Massepotential
3. Kurzschluß zur Versorgungsspannung
4. Kurzschluß zur Leitung CAN_{Low}
5. Kurzschluß zu einer anderen stromführenden Leitung.

Tritt an einem CAN-Datenbus an einer der beiden Signalleitungen CAN_{Hieg} bzw. CAN_{Low} eine der vorstehend genannten Störungen auf, so ist die von einem der Bus-Treiber verursachte differentielle Einprägung eines Pegels "dominant" oder "rezessiv" gestört. Die Spannungspegel an den Signalleitungen werden verfälscht, wodurch auf dem Bus kein gültiger Zustand "dominant" bzw. "rezessiv" mehr vorliegt. Die Bus-Empfänger erzeugen keinerlei Signale, die eine gültige Aktivität auf dem Bus anzeigen.

Auf diese Weise ist bei gekoppelten Radmodul-Datenbussen sowohl für das Zentralmodul (2) an seinem zweiten Datenbus-Anschluß (14) als auch für das Zentralmodul (3) an seinem zweiten Datenbus-Anschluß (26) eine Datenbus-Störung am Ausbleiben von Bus-Empfängersignalen zu erkennen. Eine Datenbus-Störung ist gleichbedeutend mit einem Fehler auf dem Datenbus. Die Fehler-Überwachungseinrichtungen in beiden Zentralmodulen (2, 3) überwachen die genannten Datenbus-Anschlüsse und entscheiden auf einen Bus-Fehler, wenn sie innerhalb einer festgelegten Sicherheits-Zeit, die z. B. 5 ms beträgt, vom Bus-Empfänger kein Signal empfangen.

Ein Bus-Fehler auf gekoppelten Radmodul-Datenbussen wird also unabhängig voneinander sowohl vom Zentralmodul (2) als auch vom Zentralmodul (3) erkannt. Bei einem Bus-Fehler wird ebenfalls von beiden Zentralmodulen eine Trennung der Radmodul-Datenbusse vorgenommen, indem Zentralmodul (2) den Ausgang (16) und Zentralmodul (3) den Ausgang (28) auf den logischen 0-Zustand setzt. Mit dieser Trennung ist die Zweikreisigkeit der Bremseinrichtung sofort wieder hergestellt; die Trennung vormals gekoppelter Radmodul-Datenbusse stellt sicher, daß der den Anlaß zur Trennung gebende Fehler auf dem einen gestörten Radmodul-Datenbus, nicht auf den anderen intakten Radmodul-Datenbus übertragen wird. Die bei der Gefahr eines zerstörenden Fehlers vorgesehene Trenneinrichtung (10) verhindert zusätzlich eine Zerstörung des intakten Radmodul-Datenbusses.

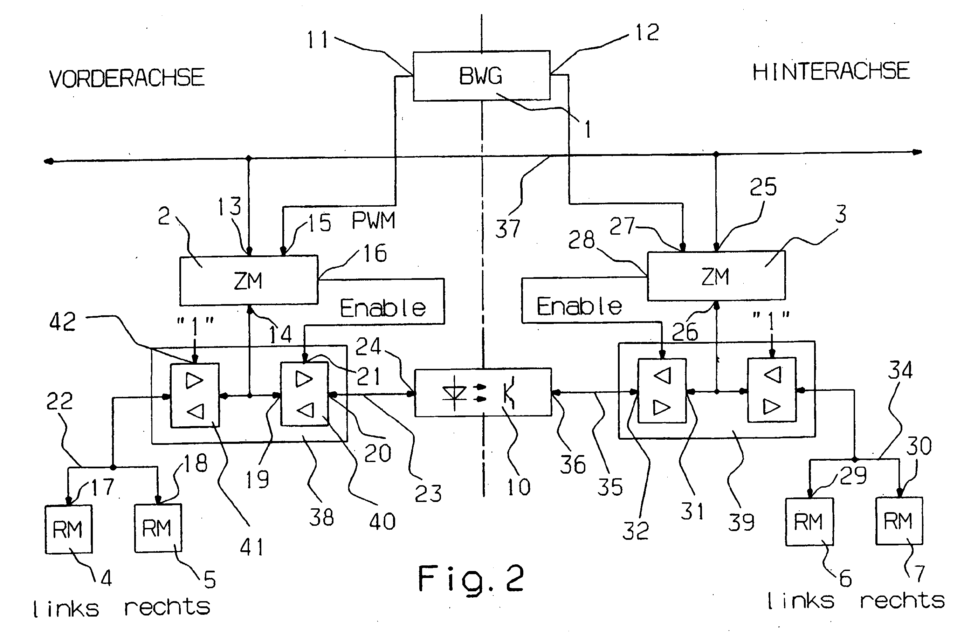

Fig. 2 zeigt das Blockschaltbild des elektronischen Bremssystems nach Fig. 1 mit einer alternativen Ausführungsform der Schalteinrichtungen. Die Komponenten in Fig. 2 sind identisch mit denen in Fig. 1, wodurch sie mit den Bezugszeichen nach Fig. 1 versehen sind. Eine Ausnahme stellen lediglich die mit mechanischen Schaltern versehenen Schalteinrichtungen (8, 9) nach Fig. 1, die in Fig. 2 durch die beiden mit Sternkopplern versehenen Schalteinrichtungen (38, 39) ersetzt sind, wobei Schalteinrichtung (38) der Vorderachse und Schalteinrichtung (39) der Hinterachse zugeordnet ist. Die elektrischen Eingänge und Ausgänge der Schalteinrichtungen (38) und (39) sind völlig gleichwirkend mit den elektrischen Eingängen und Ausgängen der Schalteinrichtungen (8) und (9) nach Fig. 1, so daß die gleichen Bezugszeichen gewählt sind.

Die Schalteinrichtung (38) nach Fig. 2 verfügt also über einen ersten Anschluß (19), einen zweiten Anschluß (20) und einen Steuer-Eingang (21); für die Schalteinrichtung (39) ist ein erster Anschluß (31), ein zweiter Anschluß (32) und ein Steuer-Eingang (33) vorgesehen. Durch die gleichen Bezugszeichen aller Eingänge und Ausgänge von Fig. 1 und Fig. 2 und die völlig gleichartige Verschaltung der Einrichtungen nach Fig. 1 und Fig. 2 ist die Verschaltung der Komponenten nach Fig. 2 durch die vorstehende Beschreibung der Verschaltung der Komponenten nach Fig. 1 dargelegt. Der innere Aufbau und die Wirkungsweise der Schalteinrichtungen (38, 39) nach Fig. 2 sind identisch; mit der folgenden Erläuterung der Schalteinrichtung (38) nach Fig. 2 ist damit auch die Schalteinrichtung (39) erläutert.

In Fig. 2 koppelt der Sternkoppler (38), solange an seinem Steuer-Eingang (21) ein logisches 1-Signal anliegt, den Radmodul-Datenbus (22) mit der Datenbus-Erweiterung (23) und trennt die beiden Datenbusse (22, 23), wenn am Steuereingang (21) ein logisches 0-Signal vorgegeben wird.

Der Sternkoppler (38) stellt eine Schalteinrichtung zur Kopplung bzw. Trennung der Radmodul-Datenbusse dar, bei der die Kopplung bzw. Trennung der Datenbusse nicht mit Hilfe von mechanischen Schaltern, wie bei der Schalteinrichtung (8) nach Fig. 1 erfolgt, sondern mit elektronischen Mitteln durchgeführt wird.

Die DE-OS-44 29 953 schlägt einen Sternkoppler für serielle Datenbusse nach dem CSMA/CD-Verfahren vor, der eine Vielzahl von Einzel-Bussystemen zu einem Gesamt-Bussystem verbindet, wobei innerhalb des gesamten Bus-systems eine Arbitrierung stattfindet, in die alle Einzel-Bussysteme einbezogen sind.

Der Sternkoppler (38) nach Fig. 2 stellt einen Sternkoppler entsprechend der DE-OS-44 29 953 dar, bei dem zwei Einzel-Bussysteme [nämlich der Radmodul-Datenbus (22) und die Datenbus-Erweiterung (23)] verbunden werden. Die Funktion des bekannten Sternkopplers bei seinem Einsatz in der Schalteinrichtung (38) wird anhand der Hauptkomponenten des Sternkopplers erläutert, die der besseren Verständlichkeit wegen vereinfacht dargestellt sind.

Die Sternkoppler-Schalteinrichtung (38) verfügt über eine erste Verbindungseinrichtung (40) und eine zweite Verbindungseinrichtung (41); die erste Verbindungseinrichtung (40) wird durch den Steuer-Eingang (21), die zweite Verbindungseinrichtung durch einen weiteren Steuer-Eingang (42) gesteuert. Die Verbindungseinrichtungen (40, 41) bestehen aus je einem Bus-Treiber und einem Bus-Empfänger. Die Funktion von Bus-Treiber und Bus-Empfänger wird durch den Signalpegel am Steuer-Eingang vorgegeben, wobei ein logischer 0-Pegel Bus-Treiber und Bus-Empfänger deaktiviert und ein logischer 1-Pegel Bus-Treiber und Bus-Empfänger aktiviert. Der weitere Steuer-Eingang (42) der Verbindungseinrichtung (41) ist per Verdrahtung fest mit einem logischen 1-Pegel beaufschlagt, so daß der Bus-Treiber und der Bus-Empfänger der Verbindungseinrichtung (41) immer aktiviert sind: Es liegt eine Durchschaltung vor, wodurch sich der Radmodul-Datenbus (22) vom zweiten Datenbus-Anschluß (14) des Zentralmoduls (2) über die durchgeschaltete Verbindungseinrichtung (41) zum Datenbus-Anschluß (17) des Radmoduls (4) und zum Datenbus-Anschluß (18) des Radmoduls (5) erstreckt.

Der Radmodul-Datenbus (22) ist ebenfalls an den Anschluß (19) der Verbindungseinrichtung (40) angeschlossen, welcher den ersten Anschluß der Schalteinrichtung (38) darstellt. Die Steuereinrichtung (38) wird, wie oben erläutert, vom Zentralmodul (2) über ihren Ausgang (16) gesteuert; im Falle eines logischen 1-Signales ist die Verbindungseinrichtung (40) aktiviert, und es ist eine Kopplung zwischen Radmodul-Datenbus (22) und Datenbus-Erweiterung (23) hergestellt; im Falle eines logischen 0-Signales ist die Verbindungseinrichtung (40) deaktiviert, und der Radmodul-Datenbus ist gegenüber der Datenbus-Erweiterung (23) getrennt.

Mit der gleichen Funktion und der gleichen Art der Steuerung verhalten sich die Ausführungsformen der Erfindung nach Fig. 1 und Fig. 2 völlig gleichartig. Die Ausführungsform mit den Sternkopplern entsprechend Fig. 2 weist gegenüber der Ausführungsform nach Fig. 1 mit den mechanischen Schaltern den Vorteil auf, daß die elektronischen Bus-Treiber und Bus-Empfänger üblicherweise einen höheren Grad von Zuverlässigkeit aufweisen und eine längere Lebensdauer zeigen.

Neben den in Fig. 1 und Fig. 2 gezeigten Anordnungen von Modulen sind weitere Ausführungen möglich. So ist es vorstellbar, daß in einem Bremssystem mehr als zwei Hierarchie-Ebenen vorgesehen sind. Auch ist es möglich, daß ein Fahrzeug über mehr als vier Räder verfügt, wodurch sich die Anzahl der Radmodule erhöht; bei einem Fahrzeug mit sechs Rädern können z. B. dem Vorderachsen-Zentralmodul zwei Radmodule und dem Hinterachsen-Zentralmodul vier Radmodule zugeordnet werden.

Es ist weiter möglich, die in Fig. 1 oder Fig. 2 für die Vorder- und Hinterachse vorgesehenen jeweils zwei Radmodule zu einem Achsmodul zusammenzufassen. Auf diese Weise entsteht ein Achsmodul für die Vorderachse und ein Achsmodul für die Hinterachse, deren Datenbusse in der beschriebenen Weise koppelbar ausgeführt sind.

Die Erfindung ist nicht auf das erläuterte Ausführungsbeispiel beschränkt; für die Erfindung ist entscheidend, daß bei einer Anordnung von Datenbussen in mehr als einer Hierarchie-Ebene durch Kopplung von Datenbussen auf einer unteren Hierarchie-Ebene den direkten Austausch von Daten zwischen Modulen auf der unteren Hierarchie-Ebene beschleunigen kann, um bestimmte, z. B. geregelte Vorgänge zu verbessern, wobei durch die Kopplung die Sicherheit gegenüber Ausfällen nicht beeinträchtigt werden darf.

## Patentansprüche

1. Elektronisches Bremssystem für Radfahrzeuge mit folgenden Merkmalen:
a) Es ist eine Elektronik zur Ansteuerung von Bremsdruck-Modulatoren vorgesehen, die aus Zentralmodulen (2,3) und Radmodulen (4, 5, 6 , 7) besteht;
b) es sind mindestens zwei Zentralmodule (2, 3) mit eigener Intelligenz vorgesehen, die über mindestens einen Mikrocomputer verfügen, und die vorzugsweise an zentraler Stelle des Fahrzeugs angeordnet sind;
c) es sind den Rädern zugeordnete Radmodule (4, 5, 6, 7) mit eigener Intelligenz vorgesehen, die über mindestens einen Mikrocomputer verfügen, und die vorzugsweise in der Nähe der Räder angeordnet sind;
d) jedem Zentralmodul (2, 3) ist eine Anzahl von Radmodulen (4, 5, 6, 7) zugeordnet;
e) zum Datenaustausch zwischen den Zentralmodulen (2, 3) ist ein Datenbus (37) mit festgelegten Schnittstellen vorgesehen, der die Zentralmodule (2, 3) verbindet;
f) zum Datenaustausch zwischen jeweils einem Zentralmodul (2, 3) und den ihm zugeordneten Radmodulen (4, 5, 6, 7) ist ein Radmodul-Datenbus (22, 34) mit festgelegten Schnittstellen vorgesehen, der das Zentralmodul (2, 3) mit den Radmodulen (4, 5, 6, 7) verbindet;
g) die Anzahl der Radmodul-Datenbusse (22, 34) ist gleich der Anzahl der Zentralmodule (2, 3);
**gekennzeichnet durch** das folgende Merkmal:
h) die Radmodul-Datenbusse (22, 34) sind verbindbar ausgeführt, derart, dass bei der Kopplung der Radmodul-Datenbusse (22, 34) ein direkter Datenaustausch zwischen den Radmodulen (4, 5, 6, 7) ermöglicht wird.

2. Elektronisches Bremssystem nach Anspruch 1, **dadurch gekennzeichnet, dass** die Radmodul-Datenbusse (22, 34) als serielle Bussysteme nach dem Carrier-Sense-Multiple-Access-Zugriffsverfahren mit Collision-Detection (CSMA/CD) realisiert sind.

3. Elektronisches Bremssystem nach Anspruch 2, **dadurch gekennzeichnet, dass** für die Datenbusse (22, 34, 37) der CAN-Bus-Standard zugrunde gelegt ist.

4. Elektronisches Bremssystem nach mindestens einem der Ansprüche 1 bis 3, **dadurch gekennzeichnet, dass** zur Verbindung der Radmodul-Datenbusse (22, 34) Schalteinrichtungen (8, 9, 38, 39) vorgesehen sind.

5. Elektronisches Bremssystem nach Anspruch 4, **dadurch gekennzeichnet, dass** jedem Radmodul-Datenbus (22, 34) eine Schalteinrichtung (8, 9, 38, 39) zugeordnet ist.

6. Elektronisches Bremssystem nach einem der Ansprüche 4 oder 5, **dadurch gekennzeichnet, dass** die Schalteinrichtung (8, 9, 38, 39) über zwei Zustände, einen ersten Zustand Einschaltung und einen zweiten Zustand Abschaltung verfügt.

7. Elektronisches Bremssystem nach Anspruch 6, **dadurch gekennzeichnet, dass** der Zustand Einschaltung der Schalteinrichtung (8, 9, 38, 39) zur Kopplung der Radmodul-Datenbusse (22, 34) und der Zustand Abschaltung der Schalteinrichtung (8, 9, 38, 39) zur Trennung der Radmodul-Datenbusse (22, 34) vorgesehen ist.

8. Elektronisches Bremssystem nach einem der Ansprüche 5 bis 7, **dadurch gekennzeichnet, dass** ein Zentralmodul (2, 3) über eine Steuereinrichtung zur Betätigung der dem Radmodul-Datenbus (22, 34) zugeordneten Schalteinrichtung (8, 9, 38, 39) verfügt.

9. Elektronisches Bremssystem nach einem der Ansprüche 4 bis 8, **dadurch gekennzeichnet, dass** eine Einrichtung (10) zur galvanischen Trennung der Signalleitungen der Radmodul-Datenbusse (22, 34) vorgesehen ist.

10. Elektronisches Bremssystem nach einem der Ansprüche 4 bis 9, **dadurch gekennzeichnet, dass** die Schalteinrichtung (8, 9) aus einer Anordnung aus zwei elektrisch betätigbaren Schaltern besteht.

11. Elektronisches Bremssystem nach einem der Ansprüche 4 bis 9, **dadurch gekennzeichnet, dass** die Schalteinrichtung (38, 39) aus einer Anordnung aus zwei elektronischen Sternkopplern besteht.

12. Elektronisches Bremssystem nach einem der Ansprüche 8 bis 11, **dadurch gekennzeichnet, dass** ein Zentralmodul (2, 3) über eine Einrichtung zur Überwachung des dem Zentralmodul (2, 3) zugeordneten Radmodul-Busses (22, 34) auf Bus-Fehler verfügt.

13. Elektronisches Bremssystem nach Anspruch 12, **dadurch gekennzeichnet, dass** dem Fall des Bus-Fehlers der Schalteinrichtungs-Zustand Abschaltung und dem Fall des Nicht-Bus-Fehlers der Schalteinrichtungszustand Einschaltung zugewiesen ist.

## Claims

1. Electronic braking system for wheeled vehicles, having the following features:
a) there is provided an electronics unit for controlling braking pressure modulators, which consists of central modules (2, 3) and wheel modules (4, 5, 6, 7);
b) there are provided at least two central modules (2, 3), having their own intelligence, which have at least one microcomputer and, preferably, are arranged in a central vehicle location;
c) there are provided wheel modules (4, 5, 6, 7), having their own intelligence, which are associated with the wheels, have at least one microcomputer and, preferably, are arranged in the vicinity of the wheels;
d) with each central module (2, 3) there is associated a number of wheel modules (4, 5, 6, 7);
e) for data exchange between the central modules (2, 3) there is provided a data bus (37), which has predefined interfaces and which connects the central modules (2, 3);
f) for data exchange between each central module (2, 3) and the wheel modules (4, 5, 6, 7) associated therewith there is provided a wheel module data bus (22, 34), which has predefined interfaces and which connects the central module (2, 3) to the wheel modules (4, 5, 6, 7);
g) the number of wheel module data buses (22, 34) is the same as the number of central modules (2, 3);
**characterised by the following feature:**
h) the wheel module data buses (22, 34) are arranged to be connected in such a manner that, on coupling of the wheel module data buses (22, 34), direct data exchange between the wheel modules (4, 5, 6, 7) is made possible.

2. Electronic braking system according to claim 1, **characterised in that** the wheel module data buses (22, 34) are in the form of serial bus systems according to the carrier sense multiple access protocol with collision detection (CSMA/CD).

3. Electronic braking system according to claim 2, **characterised in that** the data buses (22, 34, 37) are based on the CAN bus standard.

4. Electronic braking system according to at least one of claims 1 to 3, **characterised in that** switching devices (8, 9, 38, 39) are provided for connection of the wheel module data buses (22, 34).

5. Electronic braking system according to claim 4, **characterised in that** a switching device (8, 9, 38, 39) is associated with each wheel module data bus (22, 34).

6. Electronic braking system according to one of claims 4 or 5, **characterised in that** the switching device (8, 9, 38, 39) has two states - a first, switching-on state and a second, switching-off state.

7. Electronic braking system according to claim 6, **characterised in that** the switching-on state of the switching device (8, 9, 38, 39) is provided for coupling of the wheel module data buses (22, 34) and the switching-off state of the switching device (8, 9, 38, 39) is provided for isolation of the wheel module data buses (22, 34).

8. Electronic braking system according to one of claims 5 to 7, **characterised in that** a central module (2, 3) has a control device for actuation of the switching device (8, 9, 38, 39) associated with the wheel module data bus (22, 34).

9. Electronic braking system according to one of claims 1 to 8, **characterised in that** a device (10) is provided for electrical isolation of the signal lines of the wheel module data buses (22, 34).

10. Electronic braking system according to one of claims 4 to 9, **characterised in that** the switching device (8, 9) consists of an arrangement of two electrically actuatable switches.

11. Electronic braking system according to one of claims 4 to 9, **characterised in that** the switching device (38, 39) consists of two electronic star couplers.

12. Electronic braking system according to one of claims 8 to 11, **characterised in that** a central module (2, 3) has a device for monitoring, for bus errors, the wheel module bus (22, 34) associated with the central module (2, 3).

13. Electronic braking system according to claim 12, **characterised in that** the switching-off state of the switching device is assigned to the case of bus error and the switching-on state of the switching device is assigned to the case of no bus error.

## Revendications

1. Système de freinage électronique pour véhicule pourvu de roues présentant les caractéristiques suivantes :
i) il est prévu une unité électronique pour la commande de modulateurs de la pression de freinage, qui est constituée par des modules centraux (2,3) et des modules de roues (4, 5, 6, 7) ;
j) il est prévu au moins deux modules centraux (2,3) possédant une intelligence propre et qui disposent d'au moins un micro-ordinateur et sont disposés de préférence en un emplacement central du véhicule;
k) il est prévu des modules de roues (4,5,6,7), associés aux roues, présentant une intelligence propre et qui disposent d'au moins un micro-ordinateur et sont disposés de préférence à proximité des roues;
l) un nombre de modules de roues (4,5,6,7) est associé à chaque module central (2,3);
m) pour l'échange de données entre les modules centraux (2,3) il est prévu un bus de transmission de données (37) comportant des interfaces fixées et qui relie les modules centraux (2,3);
n) pour l'échange de données entre respectivement un module central (2,3) et les modules de roues (4,5,6,7), qui lui sont associés, il est prévu un bus (22,34) de transmission de données des modules de roues comportant des interfaces fixes et qui relie le module central (2,3) aux modules de roues (4,5,6,7);
o) le nombre des bus (22,34) de transmission de données des modules de roues est égal au nombre des modules centraux (2, 3) ;
**caractérisé par** la caractéristique suivante :
p) des bus (22,34) de transmission de données des modules de roues sont agencés de manière à pouvoir être reliés de telle sorte que lors du couplage des bus (22,34) de transmission de données des modules de roues, un échange direct de données soit possible entre les modules de roues (4, 5, 6, 7) .

2. Système de freinage électronique selon la revendication 1, **caractérisé en ce que** les bus (22,34) de transmission de données des modules de roues sont réalisés sous la forme de systèmes de bus en série conformément au procédé à accès multiple à détection de porteuse avec détection de collision (CSMA/CD).

3. Système de freinage électronique selon la revendication 2, **caractérisé en ce que** la norme de bus CAN est prise comme base pour les bus de transmission de données (22,34,37).

4. Système de freinage électronique selon au moins l'une des revendications 1 à 3, **caractérisé en ce que** des dispositifs de commutation (8,9,38,39) sont prévus pour la liaison des bus (22,34) de transmission de données des modules de roues.

5. Système de freinage électronique selon la revendication 1, **caractérisé en ce qu'**un dispositif de commutation (8,9,38,39) est associé à chaque bus (22,34) de transmission de données des modules de roues.

6. Système de freinage électronique selon l'une des revendications 4 ou 5, **caractérisé en ce que** le dispositif de commutation (8,9,38,39) comporte deux états, un premier état d'activation et un second état de désactivation.

7. Système de freinage électronique selon la revendication 6, **caractérisé en ce que** l'état d'activation du dispositif de commutation (8,9,38,39) est prévu pour le couplage des bus (22,34) de transmission de données des modules de roues et l'état de désactivation du dispositif de commutation (8,9,38,39) est prévu pour la séparation des bus (22,34) de transmission de données des modules de roues.

8. Système de freinage électronique selon l'une des revendications 5 à 7, **caractérisé en ce que** le module central (2,3) comporte un dispositif de commande pour l'actionnement du dispositif de commutation (8,9,38,39) associé au bus (22,34) de transmission de données des modules de roues.

9. Système de freinage électronique selon l'une des revendications 4 à 8, **caractérisé en ce qu'**un dispositif (10) est prévu pour la séparation galvanique des lignes de transmission de signaux du bus (22,34) de transmission de données des modules de roues.

10. Système de freinage électronique selon l'une des revendications 4 à 9, **caractérisé en ce que** le dispositif de commutation (8,9) est constitué par un dispositif formé de deux commutateurs pouvant être actionnés électriquement.

11. Système de freinage électronique selon l'une des revendications 4 à 9, **caractérisé en ce que** le dispositif de commutation (38,39) est constitué par un dispositif formé de deux coupleurs électroniques en étoile.

12. Système de freinage électronique selon l'une des revendications 8 à 11, **caractérisé en ce qu'**un module central (2,3) dispose d'un dispositif servant à contrôler la présence éventuelle d'erreurs de bus pour le contrôle du bus (22,34) de transmission de données des modules de roues associé au module central (2,3).

13. Système de freinage électronique selon la revendication 12, **caractérisé en ce que** l'état de désactivation du dispositif de commutation est affecté au cas de la présence d'une erreur dans le bus et l'état d'activation du dispositif de commutation est affecté au cas de l'absence d'erreur dans le bus.
